# EUROPÄISCHE PATENTSCHRIFT

(11) **EP 0 632 262 B1**
(45) Veröffentlichungstag und Bekanntmachung des Hinweises auf die Patenterteilung: **02.09.1998**
(21) Anmeldenummer: 94109541.6
(22) Anmeldetag: 21.06.1994
(51) Int. Cl.: G01N 21/27, G01N 21/25

(54) **Verfahren und Anordnung zum Erfassen und Auswerten analoger photometrischer Signale in einem Testträger-Analysesystem**
Method and device for measuring and evaluating analog photometric signals in an analysing system for test carriers
Procédé et dispositif pour déterminer et évaluer des signaux photométriques analogues d'un système d'analyse d'un support d'essai

(30) Priorität: 29.06.1993 DE 4321548
(43) Veröffentlichungstag der Anmeldung: 04.01.1995
(73) Patentinhaber: BOEHRINGER MANNHEIM GMBH, 68305 Mannheim (DE)
(72) Erfinder: Baumann, Edgar, D-68219 Mannheim (DE); Obermeier, Wolfgang, D-69120 Heidelberg (DE); Werner, Karl, D-69126 Heidelberg (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 075 767
- DE-A- 4 119 406
- US-A- 5 177 565
- ELEKTRONIK, SONDERHEFT 209, ELEKTRONIK ARBEITSBLÄTTER, MÜNCHEN DE Seiten 93 - 95 WUSTMANN 'ERZEUGUNG VON PSEUDO-ZUFALLSFOLGEN MIT BINÄREN SCHIEBEREGISTERN'

## Beschreibung

Die Erfindung betrifft ein Verfahren zum Erfassen und Auswerten analoger photometrischer Signale in einem Testträger-Analysesystem, bei welchem Verfahren das Testfeld eines Testträgers von einer in Hell-Dunkel-Phasen getakteten Lichtquelle bestrahlt und das von dem Testfeld remittierte Licht von einem Meßempfänger aufgenommen und dessen Meßwert an eine Meß-Integrations- und Digitalisierungsschaltung zur Auswertung weitergeleitet wird und bei dem während einer mehrere Hell- und Dunkelphasen der getakteten Lichtquelle umfassenden Meßperiode während mindestens eines Teils jeder Hellphase und während mindestens eines Teils jeder Dunkelphase der Meßwert integriert wird und aus den Integralen der Hell- und Dunkelphasen in der Meß-Integrations- und Digitalisierungsschaltung ein Gesamtintegrationswert gebildet wird.

Weiter richtet sich die Erfindung auf eine Anordnung zur Durchführung des Verfahrens.

Zur Analyse von Flüssigkeiten, insbesondere von Körperflüssigkeiten wie Blut oder Urin zum Zwecke der medizinischen Prüfung, gelangen in zunehmendem Maße Testträger-Analysesysteme zur Anwendung. Diese Systeme bestehen im wesentlichen aus Auswertegeräten und den darauf abgestimmten Testträgern.

Die Testträger sind häufig als Teststreifen ausgebildet, deren Testfelder üblicherweise aus einer Basisschicht und mindestens einer darauf angeordneten Testschicht aufgebaut sind. Die Testschicht enthält ein oder mehrere Reagenzien. Beim Aufbringen einer Probe, beispielsweise einer Körperflüssigkeit, erfolgt eine chemische Reaktion mit Inhaltsstoffen der Probe, die zu einer nachweisbaren Veränderung des Testfeldes, insbesondere zu einer Farbveränderung in einer Detektionsschicht führt. Diese Veränderung kann mittels geeigneter Verfahren und entsprechender Geräte zur quantitativen Analyse ausgewertet werden.

So kann beispielsweise durch eine reflexionsphotometrische Messung nach Ablauf der Reaktion mittels des Auswertegerätes aus dem diffusen Reflexionsvermögen des Testfeldes auf die Konzentration des zu bestimmenden Inhaltsstoffs einer Körperflüssigkeit geschlossen werden. In anderen Fällen kann man aus der zeitlichen Änderung der Reflektivität das gewünschte Analyseergebnis ableiten.

An die Erfassung und Auswertung der photometrischen Signale werden besonders hohe Genauigkeitsanforderungen gestellt, um die sehr geringen Meßströme oder Meßspannungen mit einer hinreichenden Auflösung zur Bestimmung der im Regelfall geringen Reflektivitätsänderung zu erfassen und eine quantitative Analyse zu ermöglichen. Dem steht eine Vielzahl von Störquellen gegenüber. Dies sind einerseits die für eine Auswerteelektronik zum Nachweis sehr kleiner Signale bekannten Probleme wie Verstärkerdrift, überlagerte Gleichspannungen, hochfrequente Rauschspannungen, niederfrequente Wechsel- und Brummspannungen, insbesondere durch Einstreuungen mit Netzfrequenz, Verstärkereingangsströme und Kriech- oder Restströme verschiedener Art.

Hinzu kommen die für optische Messungen typischen Störungen durch Fremdlicht. Hierbei treten sowohl relativ konstante Fremdlichtanteile als auch typische Störungen netzbetriebener Fremdlichtquellen auf, die mit der üblichen Netzfrequenz von 50 Hz oder 60 Hz arbeiten.

Bisher wurden die Testträger-Auswertegeräte in der Regel so konstruiert, daß der Zutritt von Fremdlicht zu dem Meßbereich des Gerätes, in dem sich bei der Messung das Testfeld, die getaktete Lichtquelle und der Meßempfänger befinden, zur Vermeidung der vorgenannten Fremdlichtanteile möglichst weitgehend vermieden wurde. Zu diesem Zweck wurde der Testträger beispielsweise in einen engen Kanal eingeführt. Bei anderen Geräten befand sich die Testträgerhalterung zur Aufnahme des Testträgers während der Messung innerhalb eines lichtdichten Gehäuses mit einer Klappe, die zum Einführen des Teststreifens geöffnet und zur Messung geschlossen werden mußte.

Mit diesen bekannten Maßnahmen zur Lichtabschirmung sind Nachteile verbunden. Enge Kanäle werden beim Einführen des Testträgers, beispielsweise einer Blutprobe, leicht verschmutzt. Im zweiten Fall wird durch das Erfordernis einer Klappe der Konstruktions- und Herstellungsaufwand erhöht. Außerdem hat sich gezeigt, daß die Klappe vielfach eine Ursache von Fehlbedienungen ist, wenn sie nicht vollständig geschlossen oder zu früh wieder geöffnet wird. Man muß hierbei bedenken, daß Teststreifen-Auswertegeräte vor allem von Diabetikern zur Selbstbestimmung ihrer Glucosewerte verwendet werden. Diabetiker sind jedoch vielfach aufgrund ihrer Krankheit in ihrer manuellen Geschicklichkeit eingeschränkt oder sehbehindert.

Bei größeren Analysegeräten, teilweise auch solchen, die Bestandteil eines Testträger-Analysesystems sind, wurden auch bereits Vorschläge zur zusätzlichen elektronischen Unterdrückung der Störungen durch Fremdlicht unterbreitet. Dabei wird die Lichtquelle in Hell- und Dunkelphasen getaktet. Die Signale des Meßempfängers werden dann sowohl während eines Teils der Hellphase als auch der Dunkelphase ausgewertet, wonach durch Subtraktion des Ergebnisses der Dunkelphase von dem der Hellphase solche Störungen weitgehend eliminiert werden können, die additive Beiträge zum Meßsignal liefern und sich im Verhältnis zur Taktfrequenz der Lichtquelle langsam ändern.

Zur Unterdrückung hochfrequenter Störungen sind Verfahren geeignet, bei denen das Signal des Meßempfängers über eine gewisse Meßperiode integriert wird. Dadurch werden Störungen weitgehend unterdrückt, deren Frequenzen viel größer als die reziproke Integrationszeit sind.

Aus der DE 28 14 358 B2 sind ein Verfahren und eine entsprechende Anordnung bekannt, bei denen diese beiden Maßnahmen kombiniert werden. Dabei wird ein Meßempfänger von der getakteten Lichtquelle beleuchtet und die Signale werden sowohl während eines Teils der Hellphase als auch während eines Teils der Dunkelphase integriert. Bei diesem bekannten Verfahren wird das Signal des Meßempfängers sowohl während der Hellphase als auch dasjenige während der Dunkelphase ausgewertet und die beiden digitalisierten Ergebnisse werden danach zur Bildung eines korrigierten Meßwertes voneinander subtrahiert.

In der EP 0 075 767 B1 wurden ein Verfahren und eine entsprechende Anordnung vorgeschlagen, bei denen bei hoher Auflösung und Genauigkeit in einfacher Weise und mit geringem baulichen Aufwand Meßfehler der genannten Art unterdrückt werden. Aus dieser Schrift ist ein Verfahren der eingangs bezeichneten Art bekannt. Dabei wird die Integration während mehrerer aufeinanderfolgender Hell- und Dunkelphasen ohne zwischenzeitliche Digitalisierung durchgeführt und dadurch eine lange Integrationszeit bei dennoch relativ hoher Taktfrequenz der Lichtquelle verwirklicht. Dadurch werden einerseits wegen der langen Integrationszeit noch relativ niederfrequente Hochfrequenzstörungen und andererseits wegen der relativ hohen Taktfrequenz auch sich relativ schnell ändernde Gleichspannungsanteile in hohem Maße eliminiert.

Ferner sind aus den Dokumenten US-PS 5,177,565 und DE 4119406 A1 Reflektionsphotometer bekannt, bei denen mit einer Lichtquelle mit fester Taktfrequenz, d.h. einer regelmäßigen Abfolge von Hell- und Dunkelphasen, gearbeitet wird und die Fremdlichtunterdrückung mittels Hoch- und Tiefpaßfilterung erfolgt.

Der Erfindung liegt unter Berücksichtigung des Standes der Technik die Aufgabe zugrunde, ein Verfahren zum Erfassen und Auswerten analoger photometrischer Signale in einem Testträger-Analysesystem und eine Anordnung zur Durchführung des Verfahrens zu schaffen, bei denen die Eliminierung der störenden Fremdlichtanteile derart verbessert ist, daß die Messung mit einem Testträger-Analysesystem auch ohne jegliche Abschirmung gegenüber Fremdlichtquellen bei normaler Umgebungshelligkeit in einer offenen Anordnung durchgeführt werden kann.

Zur Lösung dieser Aufgabe bei einem Verfahren der eingangs bezeichneten Art ist die Abfolge der während der Meßperiode integrierten Hell- und Dunkelphasen derart unregelmäßig, daß das durch Fouriertransformation daraus erhältliche Frequenzspektrum eine Vielzahl von unterschiedlichen Frequenzen beinhaltet. Im Rahmen der Erfindung wurde erkannt, daß die mit einer regelmäßigen Abfolge der Hell- und Dunkelphasen verbundene Fremdlichtunterdrückung unzureichend ist. Dies ist darauf zurückzuführen, daß in dem Fremdlicht manchmal problematische Störlichtquellen anzutreffen sind, die nicht frequenzstabil sind, wie beispielsweise Campingleuchten oder Stroboskoplampen. Außerdem können Synchronfrequenzen zu der Frequenz der gleichmäßig getakteten Lichtquelle oder ganzzahlige Vielfache hierzu nicht vollständig vermieden werden.

Bei dem erfindungsgemäßen Verfahren entspricht die Impulsfolge der Hell- und Dunkelphasen einem breiten Frequenzspektrum. Demzufolge trägt jede einzelne Frequenz nur mit einem kleinen Bruchteil zu dem Meßergebnis bei, so daß sich auch entsprechende Störfrequenzen nur mit einem Bruchteil-Fehlerbeitrag auf die Verfälschung des Meßergebnisses auswirken können. Auf diese Weise wird eine außerordentlich gute Unterdrückung des Fremdlichtanteils erzielt, so daß die Messung völlig ohne Lichtabschirmung bei Umgebungslicht möglich ist.

Eine erste vorteilhafte Ausbildung besteht darin, daß die Abfolge der Hell- und Dunkelphasen mittels eines Zufallsgenerators generiert wird. Die Verwendung eines echten Zufallsgenerators ist zwar möglich, in der elektronischen Realisierung allerdings technisch aufwendig, zumal gewährleistet sein sollte, daß für die Hell- und Dunkelphasen insgesamt jeweils eine gleichlange Integrationszeit verwirklicht wird.

Bevorzugt wird deshalb die Abfolge der Hell- und Dunkelphasen als vorbestimmte Pseudo-Zufallsfolge generiert. Sie kann beispielsweise mittels eines vorbesetzten, rückgekoppelten Schieberegisters, eventuell in Verbindung mit einem nachgeschalteten Modulator, realisiert werden. Dies wird beispielsweise in dem Artikel: "Erzeugung von Pseudo-Zufallsfolgen mit binären Schieberegistern", veröffentlicht in "Elektronik", Sonderheft 209, "Elektronik Arbeitsblätter", Franzis Verlag, S. 93 ff., näher erläutert. Vorteilhaft wird der Meßwert des Meßempfängers zur Bildung des Gesamtintegrationswertes zusätzlich zu der Integration während einer Pseudo-Zufallsfolge noch über weitere gleichartige Pseudo-Zufallsfolgen integriert. Durch die ein- oder mehrfache Wiederholung der Pseudo-Zufallsfolge wird der Signal-zu-Rausch-Abstand verbessert.

Das erfindungsgemäße Verfahren ist ferner bevorzugt so ausgestaltet, daß jeweils zu Beginn der Hell- und der Dunkelphasen der Meßwert des Empfängers während einer Verzögerungszeit nicht integriert wird. Auf diese Weise werden Überschwingeffekte zu Beginn einer Hellphase, Relaxationseffekte zu Beginn einer Dunkelphase und sonstige Einschwingvorgänge nicht mitintegriert und liefern daher keinen Fehlerbeitrag zu dem Meßergebnis.

Ein vorteilhaftes Ausbildungsmerkmal kann darin bestehen, daß die Integration während der integrierten Teile der Hellphasen und der integrierten Teile der Dunkelphasen jeweils in mehreren aufeinanderfolgenden Samplingschritten durchgeführt wird. Diese Verfahrensweise hat den Vorteil, daß das Verfahren in einer Switched Capacitor Technologie realisiert werden kann.

Von besonderer Bedeutung für das erfindungsgemäße Verfahren ist die Tatsache, daß das fouriertransformierte Frequenzspektrum eine Vielzahl unterschiedlicher Frequenzen beinhaltet. Je größer dabei der Frequenzbereich ist, über den die Frequenzen verteilt sind, und je mehr verschiedene Frequenzen mit einem erheblichen Anteil zur Gesamtintensität beitragen, desto besser ist dabei die Unterdrückung des Einflusses von Fremd- und Störlichtquellen auf die Messung. Anders ausgedrückt sollte das diskrete, fouriertransformierte Frequenzspektrum dem theoretisch idealen, praktisch jedoch nicht erreichbaren Grenzfall eines möglichst breitbandigen, kontinuierlichen Frequenzspektrums konstanter Intensität ("weißes" Spektrum, das allenfalls bei bestimmten, üblicherweise auftretenden Störfrequenzen wie der Netzfrequenz von 50 Hz oder 60 Hz Einkerbungen, sogenannte Notch-Frequenzen, aufweist), möglichst nahekommen.

Die erfindungsgemäße Anordnung zur Durchführung des Verfahrens weist folgende Elemente auf: Eine Lichtquelle zur Bestrahlung des zu untersuchenden Testfeldes eines Testträgers; eine Ansteuereinrichtung zur in Hell-Dunkel-Phasen getakteten Ansteuerung der Lichtquelle; einen Pulsfolgengenerator zur Generierung der Pulsfolge für die Ansteuereinrichtung; einen Meßempfänger zur Aufnahme des von dem Testfeld remittierten Lichtes; eine Meß-Integrations- und Digitalisierungsschaltung, an die der Meßwert des Meßempfängers weitergeleitet wird, um diesen zu messen, zu integrieren und zu digitalisieren. Dabei ist der Pulsfolgengenerator ein eine unregelmäßige Pulsfolge generierender Zufallsfolgengenerator.

Die Meß-, Integrations- und Digitalisierungsschaltung kann vorteilhafterweise einen Vorverstärker zur Verstärkung der Signale des Meßempfängers, eine Relaismultiplikationsstufe zur Erzeugung eines Korrelationssignals, durch die das Ausgangssignal des Vorverstärkers für die Dauer der Meßperiode während mindestens eines Teils einer Hellphase und während mindestens eines Teils einer Dunkelphase mit entgegengesetzten Vorzeichen versehen wird und einen Analog-Digital-Wandler zur Integration des Korrelationssignals während der Meßperiode, so daß der während des integrierten Teils der Dunkelphase erhaltene analoge integrierte Meßwert von dem während des integrierten Teils der Hellphase erhaltenen analogen integrierten Meßwert zur Bildung eines analogen Gesamtintegrationswertes subtrahiert wird, und zur Wandlung in eine Meßereigniszahl, sowie eine Steuerschaltung zur Steuerung des Meßablaufs umfassen.

Die Erfindung wird im folgenden anhand von in den Figuren schematisch dargestellten Ausführungsbeispielen näher erläutert; es zeigen:
- Fig. 1: Eine perspektivische Darstellung eines Teststreifen-Analysesystems;
- Fig. 2: das Prinzip-Schaltbild einer bevorzugten erfindungsgemäßen Schaltungsanordnung;
- Fig. 3: das Prinzip-Schaltbild einer abgewandelten erfindungsgemäßen Schaltungsanordnung;
- Fig. 4: ein Prinzip-Schaltbild der Erzeugung einer Pseudo-Zufallsfolge mit einem Schieberegister;
- Fig. 5: die Pseudo-Zufallsfolge zu Fig. 4;
- Fig. 6: das fouriertransformierte Frequenzspektrum zu Fig.5;
- Fig. 7: die aufintegrierte normierte Leistungsdichte zu Fig. 6;
- Fig. 8: ein Impulsdiagramm mit dem zeitlichen Verlauf der Signalformen und der Abtastzeitpunkte.

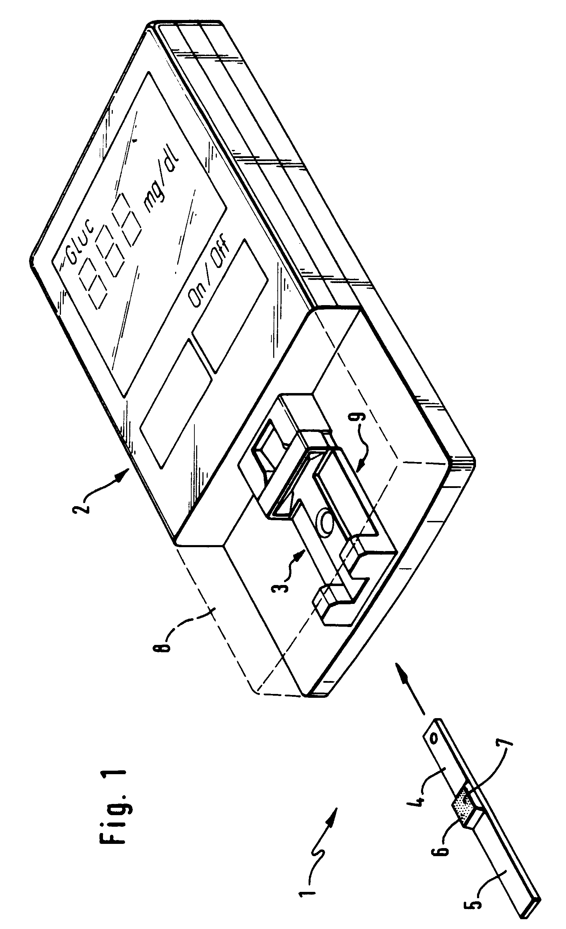

Figur 1 zeigt ein Teststreifen-Analysesystem 1, das ein Auswertegerät 2 mit einer Teststreifenhalterung 3 und einen in diese einführbaren Teststreifen 4 umfaßt. Der Teststreifen 4 besteht aus einer Basisschicht 5 und einer Testschicht 6. Beim Aufbringen von Körperflüssigkeit auf die Testschicht 6 finden chemische Reaktionen zwischen der Körperflüssigkeit und den in der Testschicht 6 enthaltenen Reagenzien statt. Eine aus diesen Reaktionen resultierende optisch nachweisbare Veränderung kann reflektionsphotometrisch in dem das Testfeld 7 bildenden Teil der Testschicht 6 detektiert und ausgewertet werden. Bei bisherigen Teststreifen-Analysesystemen 1 war es gebräuchlich, den Meßbereich 9 mittels der gestrichelt dargestellten lichtundurchlässigen Klappe 8 gegen das die Messung störende und verfälschende Umgebungslicht abzuschirmen. Bei dem erfindungsgemäßen Verfahren und der erfindungsgemäßen Vorrichtung kann auf eine solche Klappe 8 verzichtet werden, ohne daß das Meßergebnis hierdurch ungünstig beeinflußt wird.

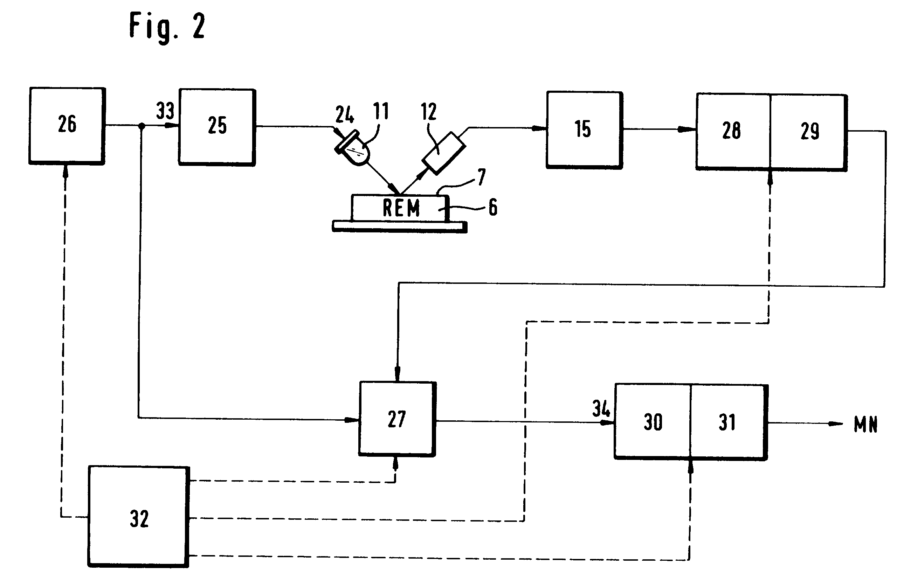

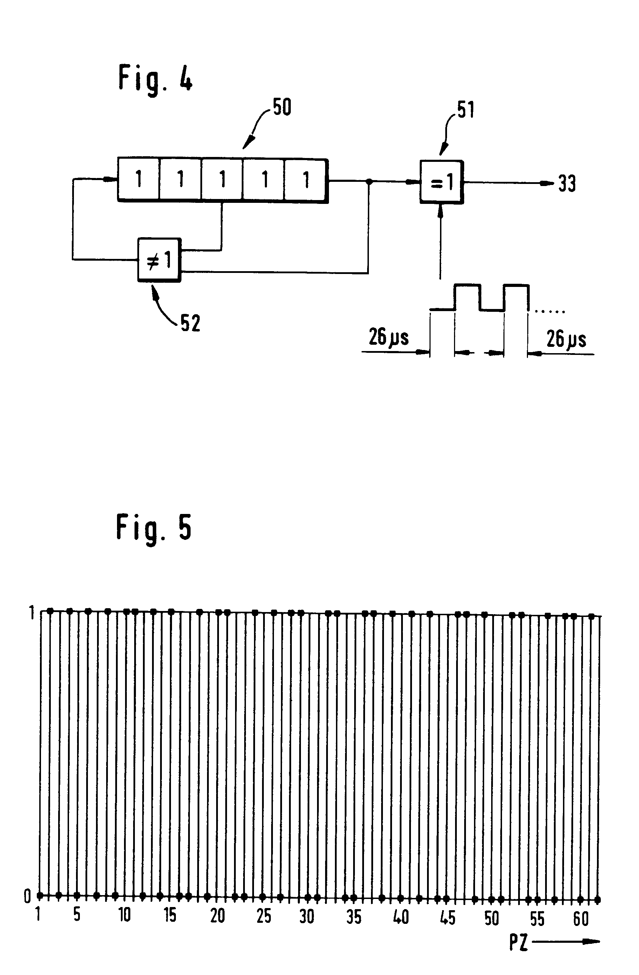

Figur 2 zeigt das Prinzip-Schaltbild einer bevorzugten erfindungsgemäßen Schaltungsanordnung. Sie weist einen Pulsfolgengenerator 26 auf, der mittels eines in Fig. 4 dargestellten rückgekoppelten Schieberegisters 50 eine Pseudo-Zufallsfolge PZ erzeugt, die als digitales Referenzsignal 33 zur Ansteuerung der getakteten Lichtquelle 11 dient. Die Pseudo-Zufallsfolge PZ ist in Fig. 5 dargestellt. Die Lichtquelle 11 ist eine Leuchtdiode, die von einer als getaktete, gesteuerte Konstantstromquelle ausgebildeten Ansteuereinrichtung 25 gespeist wird. Das die Lichtquelle 11 speisende Ausgangssignal der Ansteuereinrichtung 25 ist mit 24 bezeichnet. Die Pulsamplitude des Signals 24 ist zur Anpassung an die Toleranzen und die Meßbedingungen einstellbar. Die Lichtquelle 11 bestrahlt das Testfeld 7, dessen Remissionswert REM von dem Meßempfänger 12 aufgenommen wird. Der Meßempfänger 12 ist eine Photodiode, die den Remissionswert REM in einen Photostrom umwandelt.

Der Vorverstärker 15 wandelt den Photostrom in eine Spannung um. In dem Ausführungsbeispiel beträgt der Nutzstrombereich ca. 1 bis 3 mA, der Störstrombereich liegt bei ca. 0 bis 10 mA. Eine Übersteuerung des Vorverstärkers 15 kann durch ein Übersteuerungssignal ausgewertet werden. Die Signale des Vorverstärkers 15 werden durch einen Hochpaßfilter 28 gefiltert, der zur Gewährleistung einer optimalen Spannungsaussteuerung der nachfolgenden Stufen den Gleichlichtanteil abtrennt und vorzugsweise direkt nach dem Vorverstärker 15 angeordnet ist.

Bei DC-Kopplung würde der Aussteuerbereich der Meß-, Integrations- und Digitalisierungsschaltung um den Faktor eingeschränkt, um den das Störsignal das Nutzsignal übersteigen kann. Durch Abtrennen des Gleichlichtanteils mit dem Hochpaßfilter, d.h. AC-Kopplung der Signale, läßt sich dies vermeiden. Die untere Grenzfrequenz des Hochpaßfilters 28 liegt bei ca. 200 Hz und die obere Grenzfrequenz des Vorverstärkers 15 bei ca. 150 kHz.

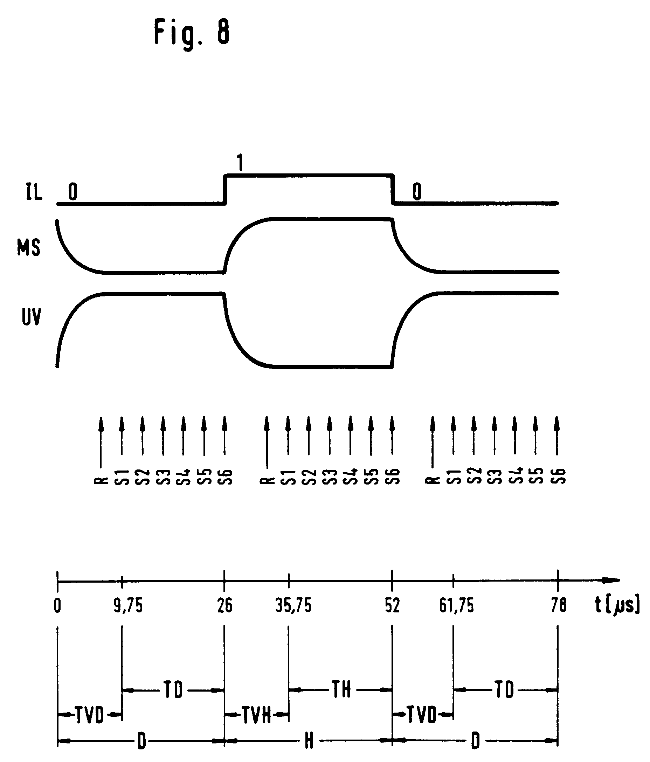

Das Einschwingverhalten des Vorverstärkers 15 ist dann ohne Einfluß, wenn, wie anhand der Figur 8 noch näher erläutert wird, das Meßsignal innerhalb eines Bits jeweils erst nach einer Verzögerungszeit, die länger als die Einschwingzeit des Vorverstärkers 15 ist, erfaßt wird.

Dem Hochpaßfilter 28 ist ein programmierbarer Verstärker 29 nachgeschaltet, dessen Verstärkung zum Ausgleich der Empfindlichkeitstoleranzen der Lichtquelle 11 und des Meßempfängers 12 programmierbar ist und der für eine Vollaussteuerung der Relaismultiplikationsstufe 27 sorgt. Der Ausgleich erfolgt vor der Relaismultiplikationsstufe 27, weil hierdurch Fehler durch deren Offset-Spannungsdrift minimiert werden. Der Hochpaßfilter 28 und der programmierbare Verstärker 29 sind zur Erzielung eines Höchstmaßes an Integration im Chip in Switched Capacitor Technologie aufgebaut. Die Signale werden in Form von gesampleten Kondensator ladungen mit einer Sampling-Periode von 3,25 µs weiterverarbeitet.

Die Signale gelangen an eine Relaismultiplikationsstufe 27, in der das Analogsignal im Takt des Referenzsignals 33 des Pulsfolgengenerators 26 während des integrierten Teils der Hellphasen der Lichtquelle 11 mit +1 und während des integrierten Teils der Dunkelphasen D mit -1 multipliziert wird. Hierdurch wird ein Korrelationssignal 34 für die nachfolgende Integration gebildet, welches der Differenz der während der Dunkelphasen erhaltenen analogen integrierten Meßwerte und der während der Hellphasen erhaltenen analogen integrierten Meßwerten entspricht. Die Relaismultiplikation wird in Form von sechs aufeinanderfolgenden Samples im Abstand von je 3,25 µs innerhalb eines Bits (Taktzeit der Pseudo-Zufallsfolge) von 26 µs durchgeführt. Die Abtastrate muß hoch sein, um in Anbetracht der Bandbreite von Nutz- und Störsignalen die guten Eigenschaften des Kreuzkorrelationsprinzips, wie z.B. die hohe Störunterdrückung, zu erhalten. Eine einmalige Abtastung innerhalb der 26 µs-Periode der Pseudo-Zufallsfolge ist nicht ausreichend. Eine Abtastung im 1 µs-Abstand würde zwar alle Oberwellen der Pseudo-Zufallsfolge gemäß Fig. 5 berücksichtigen, ist aber technisch aufwendiger zu realisieren.

Das Korrelationssignal 34 gelangt an einen schaltbaren Verstärker 30, der ebenfalls in Switched Capacitor Technologie gefertigt ist. Die schaltbare Verstärkung dient dem Ausgleich der Toleranzen der Lichtquelle 11 sowie des Vorverstärkers 15. Der Analog-Digital-Wandler 31 arbeitet nach dem Sigma-Delta-Wandelprinzip, das eine vollständige Integration des Wandlers auf dem Chip ermöglicht, wobei ein solcher Wandler mit sehr kleinem Kondensator auskommt. Er hat eine Auflösung von 3844 Counts, d.h. etwa 12 Bit und integriert während einer Meßperiode von 100 ms die analogen Korrelationssignale 34 und wandelt sie in Meßereigniszahlen MN um. Der Analog-Digital-Wandler 31 könnte beispielsweise auch nach dem Dual-Slope-Verfahren arbeiten.

Die erfindungsgemäße Anordnung weist ferner eine Steuerschaltung 32 zur Steuerung des Meßablaufs auf. Die Steuersignale sind gestrichelt dargestellt.

An dem Vorverstärker 15, dem Hochpaßfilter 28, dem programmierbaren Verstärker 29, dem schaltbaren Verstärker 30 und dem Analog-Digital-Wandler 31 findet eine Überwachung der Meßsignale statt. Dadurch kann das Teststreifen-Analysesystem 1 selbsttätig Umgebungsbedingungen erkennen, die eine korrekte Messung nicht gestatten, und beispielsweise beim Übersteuern der Meßsignale ein Fehlerbit setzen.

Die gesamte Schaltung ist in einen Chip integriert, außerhalb dessen nur die Lichtquelle 11 und der Meßempfänger 12 sitzen. Die chipinternen Widerstandswerte sowie die chipinternen Kondensatoren haben relativ große Herstelltoleranzen. Die Toleranzen des Vorverstärkers 15 sowie der Lichtquelle 11 werden mit Hilfe der veränderbaren Verstärkungen des programmierbaren Verstärkers 29 und des schaltbaren Verstärkers 30 ausgeglichen.

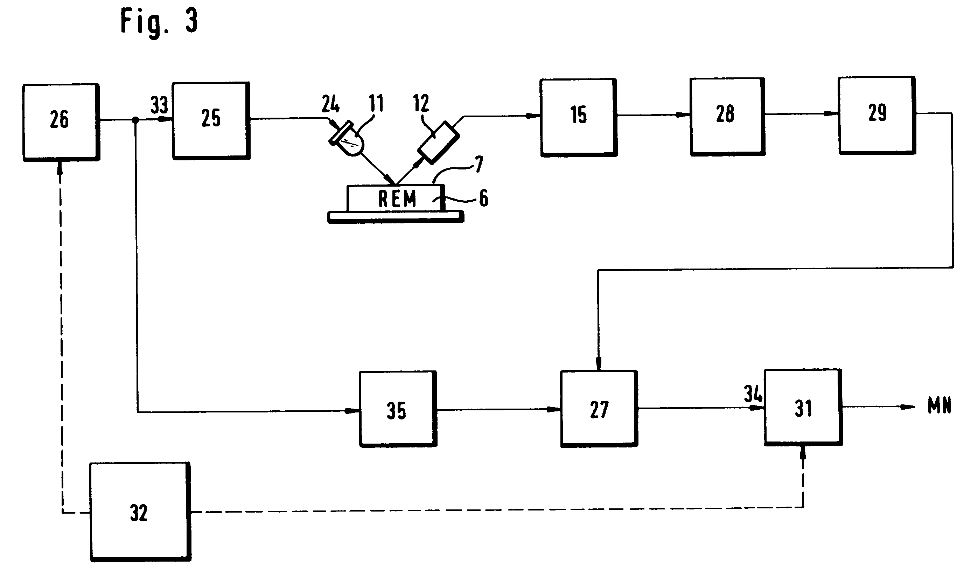

In Figur 3 ist das Prinzip-Schaltbild einer abgewandelten erfindungsgemäßen Schaltungsanordnung dargestellt. Sie weist gegenüber der in der Figur 2 dargestellten Schaltungsanordnung die Besonderheit auf, daß für das Referenzsignal 33 eine Verzögerungsschaltung 35 zur Kompensation der Gruppenlaufzeit vorgesehen ist, die eine phasenrichtige Relaismultiplikation mit dem analogen Signal gewährleistet. Nachfolgend wird anhand von Figur 8 erläutert, daß auf die Gruppenlaufzeitkompensation verzichtet werden kann, wenn die an der Relaismultiplikationsstufe 27 auftretende Laufzeitdifferenz zwischen dem Referenzsignal 33 und dem analogen Meßwert kleiner als die Verzögerungszeiten ist, während der jeweils zu Beginn einer Hell- oder Dunkelphase der Meßwert des Meßempfängers 12 nicht gemessen wird.

Figur 4 zeigt das Prinzip-Schaltbild der Erzeugung einer Pseudo-Zufallsfolge mit einem rückgekoppelten, binären Schieberegister 50. Die Länge des Schieberegisters 50 ist fünf. Die Rückkopplung erfolgt durch Abgriff des dritten und des fünften Registers über ein Exclusiv-Oder-Gatter 52 auf den Eingang. Die fünf Register werden zunächst mit Einsen besetzt. Diese wandern dann bei jedem Takt um eine Stelle nach rechts, wobei sich der am Eingang nachgeschobene logische Zustand aus der Funktion des Exclusiv-Oder-Gatters 52 ergibt. Im dargestellten Fall resultiert eine Pulsfolge mit maximal vier aufeinanderfolgenden gleichen Zuständen (0 oder 1). Da sich dies als ungünstig erwiesen hat wird zusätzlich eine digitale Modulation mit Hilfe des Modulators 51, der ein inverses Exclusiv-Oder-Gatter ist, und des unterhalb dieses Modulators 51 dargestellten Impulszuges durchgeführt. Der Takt des Schieberegisters 50 ist 52 µs, der Takt der Modulation ist 26 µs. Dies führt dazu, daß die maximale Anzahl gleicher aufeinanderfolgender Zustände des digitalen Referenzsignales 33 zwei ist. Es liegt also für jeweils höchstens 52 µs auf 0 oder 1.

Figur 5 zeigt eine Periode der von der Schaltung gemäß Figur 4 erzeugten Pseudo-Zufallsfolge PZ. Es ist eine Folge von 62 Bit von jeweils 26 µs Pulslänge. Die Pseudo-Zufallsfolge PZ wird zur Bildung des Gesamtintegrationswertes mit einem ausreichenden Signal-zu-Rausch-Abstand mehrfach während der Meßperiode wiederholt. Im Ausführungsbeispiel wird innerhalb einer Meßperiode zur Ermittlung eines Meßergebnisses die 62 Bit-Pseudo-Zufalllsfolge 62 mal wiederholt, so daß eine Meßperiodenlänge von 100 ms resultiert. Das resultierende Signal 33 steuert über die Ansteuereinrichtung 25 die Lichtquelle 11 an, so daß diese innerhalb der Meßperiode entsprechend dem Takt des Signals 33 das Testfeld 7 in einer unregel-mäßigen Abfolge von Hellphasen und Dunkelphasen bestrahlt. Sowohl die Hellphasen als auch die Dunkelphasen haben dabei unterschiedliche Längen (im Beispielsfall sind nur jeweils zwei Längen möglich), wobei deren Aufeinanderfolge unregelmäßig ist.

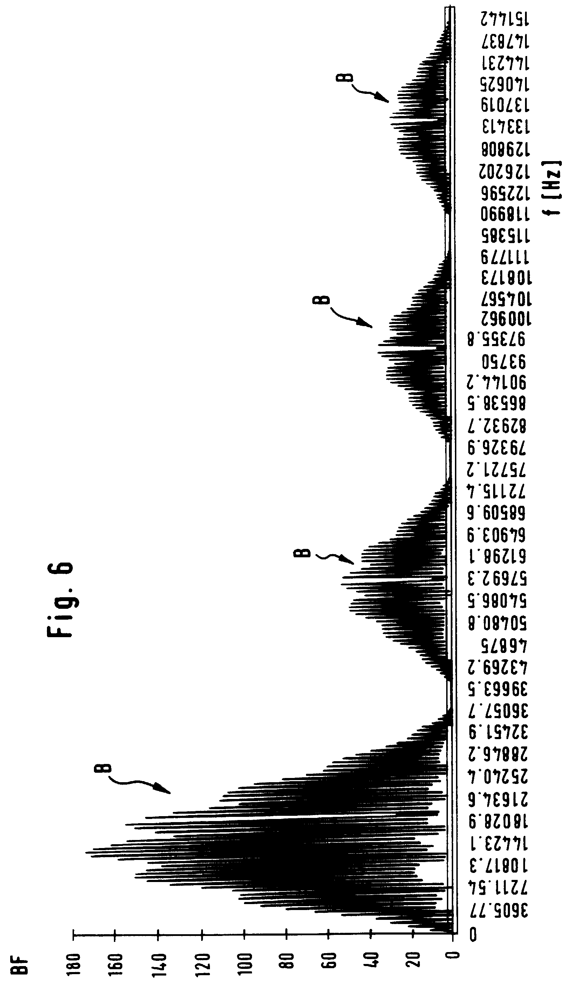

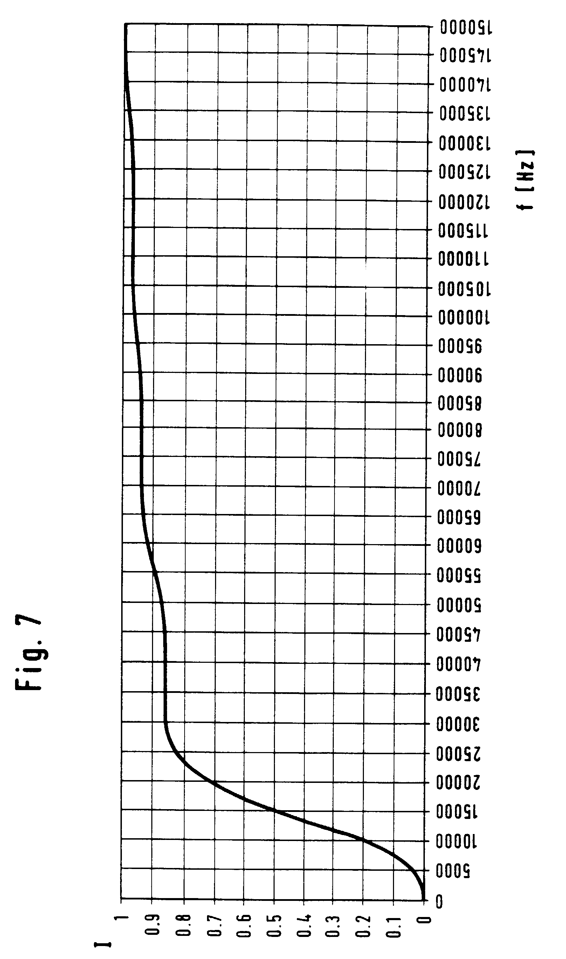

Setzt man vier solcher 62 Bit-Signalfolgen hintereinander und führt dann nach einer Kosinusfensterfunktion eine diskrete Fouriertransformation durch, so erhält man das Spektrum gemäß Figur 6, das die Beträge BF der Frequenzamplituden als Funktion der Frequenz f zeigt. Würde man die gesamte Pulsfolge der 100 ms Meßperiode MP fourier- transformieren, so würden sich an der Form dieses Spektrums nur geringfügige Änderungen ergeben. Das durch Fouriertransformation erhaltene Frequenzspektrum des die Lichtquelle 11 speisenden Signals 24 reicht von dicht über Null bis etwa 150 kHz und beinhaltet eine Vielzahl an Frequenzen, die mit einem erheblichen Anteil zur Gesamtintensität beitragen. Die Nullstellen in den Bergen dieses Spektrums sind eine Folge der 52 µs-Modulation, Die aufintegrierte normierte Leistungsdichte I zu dem Frequenzspektrum gemäß der Figur 6 ist in Figur 7 dargestellt.

Wie erwähnt sollte das Frequenzspektrum weitgehend gleichmäßig verteilt sein. Mit anderen Worten sollten Frequenzen, die in erheblichem Umfang zur Signalintensität beitragen, in einem breiten Frequenzbereich vorhanden sein, wobei sich in der Regel -wie in Figur 6 dargestellt- die Frequenzen mit erheblichen Intensitätsanteilen auf mehrere Banden B verteilen, zwischen denen sich Frequenzen mit geringen Intensitätsanteilen (nahe Null) befinden. Quantitativ kann man sagen, daß Frequenzen des durch Fouriertransformation enthaltenen Frequenzspektrums des die Lichtquelle 11 speisenden Signals 24, deren Amplitude mehr als 5 % der höchsten Amplitude des gesamten Spektrums beträgt, über einen Frequenzbereich hinaus vorhanden sein sollten, dessen höchste und niedrigste Frequenz sich mindestens um einen Faktor 10, bevorzugt mindestens um einen Faktor 30, besonders bevorzugt mindestens um einen Faktor 100, unterscheiden. Dies ist so zu verstehen, daß mindestens einzelne Frequenzen, die außerhalb dieses Frequenzbereiches liegen, noch eine Amplitude von mehr als 5 % der höchsten Amplitude im gesamten Spektrum haben. Bezüglich der absoluten Grenzen ist es vorteilhaft, wenn die Frequenzen, die eine Amplitude von mindestens 5 % der höchsten Amplitude des Spektrums haben, über einen Frequenzbereich hinaus vorhanden sind, dessen untere Grenze bei weniger als 5 kHz, bevorzugt weniger als 1 kHz, und dessen obere Grenze bei mehr als 50 kHz, bevorzugt mehr als 100 kHz, liegt. Die Anzahl der Frequenzen des fouriertransformierten Frequenzspektrums, die eine Amplitude von mindestens 5 % der Frequenz mit der höchsten Amplitude des Frequenzspektrums haben, sollte größer als 20, bevorzugt größer als 50, besonders bevorzugt größer als 100, sein.

Figur 8 zeigt ein Impulsdiagramm mit dem zeitlichen Verlauf der Signalformen und der Abtastzeitpunkte. Dargestellt in Abhängigkeit von der Zeit t sind für eine Dunkel-Hell-Dunkel-Impulsfolge, das heißt für eine Impulsfolge 0-1-0 des Referenzsignals 33, der die Lichtquelle 11 speisende Strom IL der Ansteuereinrichtung 25 (Signal 24), das Ausgangssignal MS des Vorverstärkers 15 und die gegenüber MS invertierte Ausgangsspannung UV des programmierbaren Verstärkers 29.

Der von dem Pulsfolgengenerator 26 gesteuerte Speisestrom IL der Lichtquelle 11 hat einen nahezu stufenförmigen Verlauf, wobei jeder Hell- bzw. Dunkeltakt, eine Länge von 26 µs hat. (Im dargestellten Fall erscheint die Abfolge 0-1-0 regelmäßig. Abgebildet ist jedoch nur ein kleiner Ausschnitt der Meßperiode, in der die Hell- und Dunkelphasen eine unregelmäßige Abfolge bilden). Das Meßsignal des Meßempfängers 12 und damit das Signal MS kann aufgrund von Überschwing-, Einschwing- und Relaxationseffekten der sprunghaften Änderung des Stromes IL nur mit endlichen Anstiegs- bzw. Abklingzeiten (hier ca. 9,75 µs) folgen. Die Ausgangsspannung UV des programmierbaren Verstärkers 29 folgt invertiert dem Verlauf von MS.

Unterhalb des Signalverlaufes UV sind mit Pfeilen Zeitpunkte markiert. Zahlenwerte und die nachfolgend verwendeten Bezeichnungen für bestimmte Zeitspannen sind darunter in Figur 8 eingezeichnet.

Zu dem Zeitpunkt R beginnt die Integration der elektrischen Referenz des Sigma-Delta-Wandlers. Dieser Zeitpunkt kann innerhalb der Anstiegs- bzw. Abklingzeiten des Signals UV liegen. Hierdurch werden diese Zeiten, in denen das Signal UV noch nicht seinen korrekten Wert erreicht hat und deswegen nicht integriert werden soll, sinnvoll genutzt.

Zu den Zeitpunkten S1, die um die Verzögerungszeit TVH bzw. TVD von jeweils 9,75 µs später als der Beginn einer Hellphase H oder Dunkelphase D liegen, wird die Relaismultiplikation zwischen dem Referenzsignal 33 und dem analogen Signal UV gestartet, und zwar für jeweils sechs aufeinanderfolgende Samples im Abstand von 3,25 µs. Die sechs Samples liegen innerhalb der Perioden TD bzw. TH der Dunkelphase D bzw. der Hellphase H, in denen das Signal UV seinen endgültigen Wert angenommen hat und deswegen integriert werden soll. Die Hell- und Dunkelphasen sind vorzugsweise gleich groß, so daß das Meßergebnis der Dunkelphasen ohne Korrekturfaktor von dem Meßergebnis der Hellphasen subtrahiert werden kann.

## Patentansprüche

1. Verfahren zum Erfassen und Auswerten analoger photometrischer Signale in einem Testträger-Analysegerät, bei welchem Verfahren das Testfeld (7) eines in einer Halterung des Analysegerätes gehaltenen Testträgers (4) von einer in Hell-Dunkel-Phasen getakteten Lichtquelle (11) bestrahlt und das von dem Testfeld (7) remittierte Licht (REM) von einem Meßempfänger (12) aufgenommen und dessen Meßwert an eine Meß-, Integrations- und Digitalisierungsschaltung zur Auswertung weitergeleitet wird und bei dem innerhalb einer mehrere Hell-(H) und Dunkelphasen (D) der getakteten Lichtquelle (11) umfassenden Meßperiode während mindestens eines Teils (TH) jeder Hellphase (H) und während mindestens eines Teils (TD) jeder Dunkelphase (D) der Meßwert integriert und aus den Integralen der Hell- (H) und Dunkelphasen (D) in der Meß-Integrations- und Digitalisierungsschaltung ein Gesamtintegrationswert gebildet wird,
**dadurch gekennzeichnet,** daß
die Hellphasen (H) und Dunkelphasen (D) innerhalb der Meßperiode eine unregelmäßige Abfolge bilden und das Frequenzspektrum der unregelmäßigen Abfolge eine Vielzahl von unterschiedlichen Frequenzen beinhaltet.

2. Verfahren nach Anspruch 1, **dadurch gekennzeichnet**, daß die Abfolge der Hell-(D) und Dunkelphasen (D) als Pseudo-Zufallsfolge (PZ) generiert wird.

3. Verfahren nach Anspruch 2, **dadurch gekennzeichnet,** daß der Meßwert des Meßempfängers (12) zur Bildung des Gesamtintegrationswertes zusätzlich zu der Integration während einer Pseudo-Zufallsfolge (PZ) noch über weitere gleichartige Pseudo-Zufallsfolgen (PZ) integriert wird.

4. Verfahren nach Anspruch 1, **dadurch gekennzeichnet**, daß jeweils zu Beginn der Hell-(H) und der Dunkelphasen (D) der Meßwert des Meßempfängers (12) während einer Verzögerungszeit (TVH bzw. TVD) nicht integriert wird.

5. Verfahren nach einem der vorhergehenden Ansprüche, **dadurch gekennzeichnet,** daß die integrierten Teile (TH bzw. TD) der Hell-(H) und der Dunkelphasen (D) gleich groß sind und die Meß-Integrations- und Digitalisierungsschaltung einen Integrator (19) enthält, an welchen das Signal des Meßempfängers (12) während der Dunkelphasen (D) und während der Hellphasen (H) mit entgegengesetzten Vorzeichen angelegt wird, so daß der während der Dunkelphase (D) erhaltene analoge integrierte Meßwert von dem während der Hellphase (H) erhaltenen analogen integrierten Meßwert zur Bildung eines analogen Gesamtintegrationswertes subtrahiert wird.

6. Verfahren nach einem der vorhergehenden Ansprüche, **dadurch gekennzeichnet**, daß Frequenzen des Frequenzspektrums der unregelmäßigen Abfolge der Hellphasen (H) und Dunkelphasen (D), die eine Amplitude von mindestens 5 % der höchsten Amplitude des Frequenzspektrums haben, über einen Frequenzbereich hinaus vorhanden sind, dessen höchste und niedrigste Frequenz sich mindestens um einen Faktor 10, bevorzugt mindestens um einen Faktor 30, besonders bevorzugt mindestens um einen Faktor 100 unterscheiden.

7. Verfahren nach einem der vorhergehenden Ansprüche, **dadurch gekennzeichnet**, daß Frequenzen des Frequenzspektrums der unregelmäßigen Abfolge der Hellphasen (H) und Dunkelphasen (D), die eine Amplitude von mindestens 5 % der höchsten Amplitude des Frequenzspektrums haben, über einen Frequenzbereich hinaus vorhanden sind, dessen untere Grenze bei weniger als 10 kHz, bevorzugt weniger als 5 kHz und dessen obere Grenze bei mehr als 50 kHz, bevorzugt mehr als 100 kHz liegt.

8. Verfahren nach einem der vorhergehenden Ansprüche, **dadurch gekennzeichnet**, daß die Anzahl der Frequenzen des Frequenzspektrums der unregelmäßigen Abfolge der Hellphasen (H) und Dunkelphasen (D), die eine Amplitude von mindestens 5 % der Frequenz mit der höchsten Amplitude des Frequenzspektrums haben, größer als 20, bevorzugt größer als 50, besonders bevorzugt größer als 100, ist.

9. Anordnung zur Durchführung des Verfahrens nach Anspruch 1 mit einer Lichtquelle (11) zur Bestrahlung des zu untersuchenden Testfeldes (7) eines Testträgers (4), einer Ansteuereinrichtung (25) zur in Hell-Dunkel-Phasen getakteten Ansteuerung der Lichtquelle (11), einem Pulsfolgengenerator (26) zur Generierung einer Pulsfolge für die Ansteuereinrichtung (25), einem Meßempfänger (12) zur Aufnahme des von dem Testfeld (7) remittierten Lichtes (REM), einer Meß-Integrations- und Digitalisierungsschaltung, an die der Meßwert des Meßempfängers (12) weitergeleitet wird, um diesen zu messen, zu integrieren und zu digitalisieren,
**dadurch gekennzeichnet**,
daß der Pulsfolgengenerator (26) ein eine unregelmäßige Pulsfolge generierender Zufallsfolgengenerator ist.

10. Anordnung nach Anspruch 9, **dadurch gekennzeichnet**, daß die Meß-, Integrations- und Digitalisierungsschaltung einen Vorverstärker (15) zur Verstärkung der Signale des Meßempfängers (12), eine Relaismultiplikationsstufe (27) zur Erzeugung eines Korrelationssignals (34), welche das Ausgangssignal des Vorverstärkers (15) für die Dauer der Meßperiode (MP) während mindestens eines Teils (TH) einer Hellphase (H) und eines Teils (TD) einer Dunkelphase (D) mit entgegengesetztem Vorzeichen multipliziert und einen Analog-Digital-Wandler (31) zur Integration des Korrelationssignals (34) während der Meßperiode (MP), so daß der während des integrierten Teils (TD) der Dunkelphase (D) erhaltene analoge integrierte Meßwert von dem während des integrierten Teils (TH) der Hellphase (H) erhaltenen analogen integrierten Meßwert zur Bildung eines analogen Gesamtintegrationswertes subtrahiert wird, und zur Wandlung in eine Meßereigniszahl (MN), sowie eine Steuerschaltung (32) zur Steuerung des Meßablaufs aufweist.

11. Anordnung nach Anspruch 9 oder 10, **dadurch gekennzeichnet**, daß der Pulsfolgengenerator (26) eine eine Pseudo-Zufallsfolge generierende Schaltung ist.

12. Anordnung nach einem der Ansprüche 9 bis 11, **dadurch gekennzeichnet**, daß der Pulsfolgengenerator (26) ein binäres, rückgekoppeltes Schieberegister (50) zur Erzeugung der Pseudo-Zufallsfolge aufweist.

13. Anordnung nach Anspruch 12, **dadurch gekennzeichnet**, daß dem Schieberegister (50) ein Modulator (51) nachgeschaltet ist.

## Claims

1. A method for detecting and evaluating analog photometric signals in a test carrier analysis apparatus, wherein the test field (7) of a test carrier (4), held in a holder on the analysis apparatus, is irradiated by a light source (11) which is clocked in light and dark phases, the light (REM) reflected by the test field (7) is detected by a measurement receiver (12) and its measured value is passed to a measurement integration and digitalization circuit for evaluation, and wherein, over a measurement period comprising several light phases (H) and dark phases (D) of the clocked light source (11), the measured value is integrated over at least part (TH) of each light phase (H) and over at least part (TD) of each dark phase (D), and a total integrated value is formed from the integrals of the light phases (H) and dark phases (D) in the measurement integration and digitalization circuit, characterized in that the light phases (H) and dark phases (D) within the measurement period form an irregular sequence and wherein the frequency spectrum of the irregular sequence comprises a large number of different frequencies.

2. A method according to claim 1, characterized in that the sequence of the light phases (H) and dark phases (D) is generated as a pseudo-random sequence (PZ).

3. A method according to claim 2, characterized in that, for the formation of a total integrated value, the measured value from the measurement receiver (12) is integrated over a plurality of identical pseudo-random sequences (PZ).

4. A method according to claim 1, characterized in that, at the beginning of each of the light phases (H) and dark phases (D), the measured value from the measurement receiver (12) is not integrated during a delay time (TVH or TVD).

5. A method according to any one of the preceding claims, characterized in that the integrated parts (TH or TD) of the light phases (H) and dark phases (D) are of equal size and the measurement integration and digitalization circuit contains an integrator (19), to which the signal from the measurement receiver (12) is applied with opposite polarity during the dark phases (D) and during the light phases (H) so that the analog integrated measured value obtained during the dark phase (D) is subtracted from the analog integrated measured value obtained during the light phase (H) to give a total analog integrated value.

6. A method according to any one of the preceding claims, characterized in that frequencies in the frequency spectrum of the irregular sequence of the light phases (H) and dark phases (D) which have an amplitude of at least 5% of the highest amplitude in the frequency spectrum are present in a frequency range whose highest and lowest frequencies differ by a factor of at least 10, preferably by a factor of at least 30 and particularly preferably by a factor of at least 100.

7. A method according to any one of the preceding claims, characterized in that frequencies in the frequency spectrum of the irregular sequence of the light phases (H) and dark phases (D) which have an amplitude of at least 5% of the highest amplitude in the frequency spectrum are present in a frequency range whose lower limit is below 10 kHz, preferably below 5 kHz, and whose upper limit is above 50 kHz, preferably above 100 kHz.

8. A method according to any one of the preceding claims, characterized in that the number of frequencies in the frequency spectrum of the irregular sequence of the light phases (H) and dark phases (D) which have an amplitude of at least 5% of the frequency with the highest amplitude in the frequency spectrum is greater than 20, preferably greater than 50 and particularly preferably greater than 100.

9. An apparatus for carrying out the method according to claim 1, comprising a light source (11) for irradiating that test field (7) of a test carrier (4) which is to be examined; a triggering device (25) for triggering the light source (11), clocked in light-dark phases; a pulse sequence generator (26) for generating a pulse sequence for the triggering device (25); a measurement receiver (12) for picking up the light (REM) reflected by the test field (7); and a measurement integration and digitalization circuit to which the measured value from the measurement receiver (12) is passed for measurement, integration and digitalization, characterized in that the pulse sequence generator (26) is a random sequence generator generating an irregular pulse sequence.

10. An apparatus according to claim 9, characterized in that the measurement integration and digitalization circuit comprises a preamplifier (15) for amplifying the signals from the measurement receiver (12), a relay multiplication stage (27) for producing a correlation signal (34), which multiplies the output signal from the preamplifier (15) with opposite polarity for the duration of the measurement period (MP) during at least part (TH) of a light phase (H) and at least part (TD) of a dark phase (D), an analog-to-digital converter (31) for integrating the correlation signal (34) over the measurement period (MP) so that the analog integrated measured value obtained over the integrated part (TD) of the dark phase (D) is subtracted from the analog integrated measured value obtained over the integrated part (TH) of the light phase (H) to give a total analog integrated value, and for conversion to a measurement event number (MN), and a control circuit (32) for controlling the course of the measurement.

11. An apparatus according to claim 9 or 10, characterized in that the pulse sequence generator (26) is a circuit generating a pseudo-random sequence.

12. An apparatus according to any one of claims 9 to 11, characterized in that the pulse sequence generator (26) has a binary retroactive shift register (50) for producing the pseudo-random sequence.

13. An apparatus according to claim 12, characterized in that a modulator (51) is connected downstream of the shift register (50).

## Revendications

1. Procédé pour détecter et evaluer des signaux analogiques photométriques dans un appareil d'analyse de supports d'essai, procédé dans lequel le champ d'essai (7) d'un support d'essai (4) maintenu dans un porte-support de l'appareil d'analyse est irradié par une source de lumière cadencée en phases claires et sombres et la lumière réfléchie (REM) du champ d'essai (7) est enregistrée par un récepteur de mesure (12) et dont la valeur mesurée est transmise plus loin à un circuit de mesure, d'intégration et de numérisation à des fins d'évaluation et dans lequel à l'intérieur d'une période de mesure comportant plusieurs phases claires (H) et sombres (D) de la source de lumière cadencée (11) elle est intégrée pendant au moins une partie (TH) de chaque phase claire (H) et pendant au moins une partie (TD) de chaque phase sombre (D) et une valeur d'intégration totale est formée à partir des intégrales prises pendant les phases claires (H) et sombres (D) dans le circuit de mesure, d'intégration et de numérisation,
**caractérisé en ce que**,
les phases claires (H) et les phases sombres (D) à l'intérieur d'une période de mesure forment une série irrégulière et que le spectre de fréquences de la série irrégulière contient une pluralité de fréquences différentes.

2. Procédé selon la revendication 1, **caractérisé en ce que**, la série des phases claires (D) et phases sombres (D) est engendrée sous forme de série pseudo-aléatoire (PZ).

3. Procédé selon la revendication 2, **caractérisé en ce que**, la valeur mesurée du récepteur de mesure (12) est intégrée pour former la valeur d'intégration totale, pendant l'intégration sur une série pseudo-aléatoire (PZ) mais de plus sur des séries pseudo-aléatoires supplémentaires analogues

4. Procédé selon la revendication 1, **caractérisé en ce que**, à chaque fois au début des phases claires (H) et des phases sombres (D) la valeur mesurée du récepteur de mesure (12) n'est pas intégrée pendant un certain retard (TVH, respectivement TVD).

5. Procédé selon l'une quelconque des revendications précédentes, **caractérisé en ce que**, les parties intégrées (TH, respectivement TD) des phases claires (H) et sombres (D) sont de même grandeur et le circuit de mesure, d'intégration et de numérisation contient un intégrateur (19), auquel le signal du récepteur de mesure (12) est appliqué pendant les phases sombres (D) et avec le signe contraire pendant les phases claires (H), de sorte que la valeur mesurée intégrée analogique obtenue pendant la phase sombre (D) est soustraite de la valeur mesurée intégrée analogique obtenue pendant la phase claire (H) afin de former une valeur analogique d'intégration totale.

6. Procédé selon l'une quelconque des revendications précédentes, **caractérisé en ce que**, les fréquences du spectre de fréquences de la série irrégulière des phases claires (H) et des phases sombres (D), qui ont une amplitude spectrale d'au moins 5% de l'amplitude la plus élevée du spectre de fréquences, existent sur un domaine de fréquences étendu dont les fréquences maximale et minimale diffèrent au moins d'un facteur 10, de préférence aumoins d'un facteur 30, de manière particulièrement préférée au moins d'un facteur 100.

7. Procédé selon l'une quelconque des revendications précédentes, **caractérisé en ce que**, les fréquences du spectre de fréquences de la série irrégulière des phases claires (H) et des phases sombres (D), qui ont une amplitude spectrale d'au moins 5% de l'amplitude maximale du spectre de fréquences, existent sur un domaine de fréquences étendu, dont la limite inférieure se trouve en-dessous de 10 kHz, de préférence en-dessous de 5 kHz et dont la limite supérieure se trouve au-dessus de 50 kHz, de préférence audessus de 100 kHz.

8. Procédé selon l'une quelconque des revendications précédentes, **caractérisé en ce que**, le nombre de fréquences du spectre de fréquences de la série irrégulière des phases claires (H) et des phases sombres (D) qui ont une amplitude spectrale d'au moins 5% de celle de la fréquence ayant l'amplitude la plus élevée du spectre de fréquences, est supérieur à 20, de préférence supérieur à 50, de manière particulièrement préférée supérieur à 100.

9. Disposition pour réaliser le procédé selon la revendication 1 avec une source lumineuse (11) pour irradier le champ d'essai à étudier (7) d'un support d'essai (4), un dispositif de commande (25) pour commander de manière cadencée les phases claires et obscures de la source lumineuse (11), un générateur de trains d'impulsions (26) pour engendrer un train d'impulsions pour le dispositif de commande (25), un récepteur de mesure (12) pour enregistrer la lumière réfléchie (REM) provenant du champ d'essai (7), un circuit de mesure, d'intégration et de numérisation auquel la valeur mesurée du récepteur de mesure (12) est transmise, en vue de sa mesure, son intégration et sa numérisation,
**caractérisée en ce que**,
le générateur de trains d'impulsions (26) est un générateur de séquences aléatoires engendrant un train d'impulsions irrégulier.

10. Disposition selon la revendication 9, **caractérisée en ce que**, le circuit de mesure, d'intégration et de numérisation présente un préamplificateur (15) pour amplifier les signaux du récepteur de mesure (12), un étage de multiplication à relais (27) pour produire un signal de corrélation (34) qui, pendant la durée de la période de mesure (MP), multiplie le signal de sortie du préamplificateur (15) pendant au moins une partie (TH) d'une phase claire (H) et le multiplie avec le signe contraire pendant une partie (TD) d'une phase obscure (D), et un convertisseur analogique/numérique (31) pour intégrer le signal de corrélation (34) pendant la période de mesure (MP), de sorte que la valeur mesurée intégrée analogique obtenue pendant la partie intégrée (TD) de la phase sombre (D) est soustraite de la valeur mesurée intégrée analogique obtenue pendant la partie intégrée (TH) de la phase claire (H) et pour le convertir en un résultat numérique de mesure (MN) ainsi qu'un circuit de commande (32) pour commander le déroulement de la mesure.

11. Configuration selon la revendication 9 ou 10 **caractérisée en ce que** le générateur de trains d'impulsions est un circuit engendrant une séquence pseudo-aléatoire.

12. Configuration selon l'une quelconque des revendications 9 à 11, **caractérisée en ce que**, le générateur de trains d'impulsions (26) présente un registre à décalage binaire avec rétroaction (50) pour produire la séquence pseudo-aléatoire.

13. Configuration selon la revendication 12, **caractérisée en ce qu'**un modulateur (51) est intercalé à la suite du registre à décalage (50).
